# EUROPÄISCHE PATENTSCHRIFT

(11) **EP 2 514 009 B1**
(45) Veröffentlichungstag und Bekanntmachung des Hinweises auf die Patenterteilung: **04.06.2014**
(21) Anmeldenummer: 10778606.3
(22) Anmeldetag: 28.10.2010
(51) Int. Cl.: H01M 4/133, H01M 4/1393, H01M 4/62, H01M 10/0525

(54) **GALVANISCHEN ELEMENTS**
GALVANIC CELL
PILLE GALVANIQUE

(30) Priorität: 18.12.2009 DE 102009054939
(43) Veröffentlichungstag der Anmeldung: 24.10.2012
(73) Patentinhaber: Samsung SDI Co., Ltd., Gyeonggi-do (KR); Robert Bosch GmbH, 70442 Stuttgart (DE)
(72) Erfinder: WOEHRLE, Thomas, 80807 Munich (DE); FETZER, Joachim, 73342 Bad-Ditzenbach (DE)
(74) Vertreter: Bee, Joachim
(86) Internationale Anmeldenummer: PCT/EP2010/066360
(87) Internationale Veröffentlichungsnummer: WO 2011/072940

(56) Entgegenhaltungen:
- WO-A2-2009/142924
- US-A1- 2009 117 467
- US-B1- 7 071 258

## Beschreibung

Die vorliegende Erfindung betrifft ein galvanisches Element sowie ein Verfahren zu dessen Herstellung.

### Stand der Technik

Bei Lithium-Ionen-Zellen umfasst die negative Elektrode, welche auch als Anode bezeichnet wird, meist Graphit, sogenanntes Interkalations-Graphit, welches Lithium-lonen (Li⁺) reversibel elektrochemisch in seine dreidimensionale Schichtstruktur ein- und auslagern kann. Man spricht dabei auch von Lithium-Interkalation und Lithium-Deinterkalation. Die Lithium-Aufnahmefähigkeit von Graphit ist jedoch begrenzt. Ist der Graphit voll lithiiert, stehen die Kohlenstoffatome des Graphits zu den Lithiumatomen in einem Verhältnis von sechs zu eins. Die Stöchiometrie beträgt dementsprechend Li₁C₆. Die spezifische reversible theoretische Kapazität von Interkalationsgraphit beträgt 372 mAh/g.

Neben der Begrenzung der spezifischen reversiblen theoretischen Kapazität auf 372 mAh/g, weist Graphit weitere Nachteile auf:
Da die elektrische Leitfähigkeit von Graphit alleine nicht für Hochstromanwendungen ausreicht, umfasst die negative Elektrode meist zusätzlich sogenannten Leitruß. Leitruß ist jedoch bei der Elektrodenherstellung sehr schwer in die Beschichtungsmasse eindispergierbar und verringert auch die Energiedichte des Systems, da es sich bei Leitruß um eine passive Zellkomponente handelt. Darüber hinaus lassen sich herkömmliche Elektroden, die Leitruß als elektrisches Leitmaterial enthalten, auch erschwert verdichten.

Darüber hinaus kann die kristallographische Dichte des Graphits durch das Ein- und Auslagern der Lithiumatome wachsen und sinken. Dadurch kann eine elektrische Verbindung zwischen dem Leitruß und einem metallischen Kontaktelement zur Kontaktierung der negativen Elektrode unterbrochen werden. Dies führt zu einem Verlust an zyklisierbarer Kapazität beziehungsweise zu einer Erhöhung des Innenwiderstandes und der Impedanz der Lithium-Ionen-Zelle.

Ein weiterer Nachteil von Graphit ist die Bildung von festen Elektrolytschichten ("Solid Electrolyte Interface (SEI)). Diese festen Elektrolytschichten bilden sich auf der Graphitoberfläche, benötigt aber dazu aber Lithium-Ionen, die letztendlich irreversibel entzogen werden. Dies führt im ersten Ladezyklus zu einem irreversiblen "Verbrauch" von Lithium.

Die Druckschrift US 2009/0117467 A1 beschreibt eine Materialzusammensetzung für eine negative Elektrode einer Lithium-Ionen-Zellen, welche eine Mischung aus einem elektrochemisch aktiven Material und nanoskaligen GraphenPlättchen umfasst. Die nanoskaligen Graphen-Plättchen Plättchen sind dabei im Wesentlichen zusammengesetzt aus einer Platte einer Graphenebene oder aus Multiplatten aus geschichteten und über van-der Waals-Kräfte miteinander verbundenen Graphenebenen. Die Druckschrift US 2009/0117467 A1 offenbart, dass dabei sowohl das elektrochemisch aktive Material als auch die nanoskaligen Graphen-Plättchen Lithium-Ionen absorbieren und desorbieren können.

Die Druckschrift WO 2009/142924 A2 beschreibt eine negative Elektrode mit Graphenschichten.

### Offenbarung der Erfindung

Gegenstand der vorliegenden Erfindung ist ein galvanisches Element, beispielsweise eine Batterie beziehungsweise ein Akkumulator, insbesondere eine Lithium-lonen-Zelle, welche eine negative Elektrode (auch als Anode bezeichenbar), eine positive Elektrode (auch als Kathode bezeichenbar) und einen, zwischen der negativen Elektrode und der positiven Elektrode angeordneten Separator umfasst.

Erfindungsgemäß umfasst dabei die negative Elektrode mindestens ein Schichtsystem, welches mindestens zwei Graphenschichten und mindestens eine Polymerschicht umfasst, wobei eine Polymerschicht zwischen zwei Graphenschichten angeordnet ist.

Eine Graphenschicht kann dabei eine einzige Graphenlage oder eine Mehrlagensystem aus zwei bis zehn, beispielsweise aus zwei bis fünf, insbesondere aus zwei bis drei, geschichteten Graphenlagen umfassen. Vorzugsweise umfasst eine Graphenschicht eine einzige Graphenlage. Unter einer Graphenlage kann dabei insbesondere eine Schicht aus, in einer hexagonalen Honigwaben-Struktur angeordneten Kohlenstoffatomen mit einer Schichtdicke von einem Kohlenstoffatom (etwa 0,34 nm) verstanden werden. Eine Graphenlage wird im Rahmen der vorliegenden Erfindung nicht zu den Polymeren gezählt.

Beim Laden des galvanischen Elements können Lithiumatome an den Graphenschichten adsorbiert und beim Entladen wieder von den Graphenschichten desorbiert werden. Diese Reaktionen weisen vorteilhafterweise eine schnell Kinetik auf. Zudem ist die Affinität zwischen Lithiumatomen und den Graphenschichten vorteilhafterweise sehr hoch. Aufgrund der schnellen Kinetik weist das galvanische Element vorteilhafterweise eine hohe Hochstrombelastbarkeit auf. Darüber hinaus kann durch die schnelle Kinetik eine Bildung von festen Elektrolytschichten aus abgeschiedenem metallischen Lithium ("Solid Electrolyte Interface (SEI)) vermieden werden. Dadurch kann wiederum verhindert werden, dass Lithium dem System während der Formation irreversibel entzogen wird. Dies hat den Vorteil, dass Formationsverluste, welche bei Interkalationsgraphit etwa 10 % betragen, vermieden werden können.

Durch die Polymerschicht werden die Graphenschichten zudem derart voneinander separiert, dass an beiden Seiten der beiden Graphenschichten Lithiumatome angelagert werden können. Insbesondere können so pro Kohlenstoffsechsring einer Graphenschicht zwei Lithiumatome gebunden werden, was in einer Stöchiometrie von C₆Li₂ resultieren kann. Verglichen mit Graphit, welches eine Stöchiometrie von C₆Li aufweist, können sich somit vorteilhafterweise doppelt so viele Lithiumatome pro Kohlenstoffatome anlagern. Die negative Elektrode kann daher eine hohe Lithium-Ionen-Speicherfähigkeit, eine hohe spezifische Kapazität, insbesondere von 744 mAh/g, und eine, beispielsweise um 10 % bis 35 %, erhöhte Energiedichte, aufweisen. Durch die Erhöhung der spezifischen Kapazität kann vorteilhafterweise zudem die Dicke der negativen Elektrode reduziert sowie die Hochstrombelastbarkeit und Pulsbelastbarkeit verbessert werden.

Da die Graphenschichten selbst über eine hohe elektrische Leitfähigkeit verfügen, kann zudem auf Leitruß verzichtet und ein Abkoppeln des Leitrußes von einer metallischen Kontaktelektrode vermieden werden. Auf diese Weise kann die Lebensdauer des galvanischen Elements verlängert werden. Darüber hinaus kann so die spezifische Kapazität, der Innenwiderstand beziehungsweise die Impedanz des galvanischen Elements über die Lebensdauer des galvanischen Elements sehr stabil sein. Ferner kann durch das Vermeiden der passiven Komponente Leitruß die Energiedichte leicht erhöht werden.

Im Rahmen einer Ausführungsform des galvanischen Elements besteht jede Graphenschicht aus einer einzigen Graphenlage.

Im Rahmen einer weiteren Ausführungsform des galvanischen Elements sind an den Graphenschichten Lithiumatome angelagert oder anlagerbar. Insbesondere können an den Graphenschichten beidseitig Lithiumatome angelagert oder anlagerbar sein.

Im Rahmen einer weiteren Ausführungsform des galvanischen Elements steht die Zahl der Kohlenstoffatome der Graphenschicht zu der Zahl der, an der Graphenschicht angelagerten Lithiumatome in einem Verhältnis von 6:1,8 bis 6:2,2, insbesondere von etwa 6:2.

Im Rahmen einer weiteren Ausführungsform des galvanischen Elements umfasst das Schichtsystem mindestens zwei Graphenschichten und mindestens zwei Polymerschichten, insbesondere eine Vielzahl von Graphenschichten und Polymerschichten, wobei die Graphenschichten und Polymerschichten alternierend angeordnet sind. Auf diese Weise ist zumindest eine der Außenschichten des Schichtsystems eine Polymerschicht. Dies hat den Vorteil, dass die darunterliegende Graphenschicht auf beiden Seiten Lithiumatome anlagern kann und im Fall einer sich an die Polymerschicht anlagernden anderen Graphenschicht auch die andere Graphenschicht an beiden Seiten Lithiumatome anlagern kann. Durch die Polymerschicht können so an den einander zugewandten Seiten der Graphenschichten zweimal so viele Lithiumatome angelagert werden als bei Graphit. Im Rahmen einer weiteren Ausführungsform des galvanischen Elements ist daher auch zumindest eine Außenschicht des Schichtsystems eine Polymerschicht. Insbesondere können beide Außenschichten des Schichtsystems Polymerschichten sein. Dadurch können die darunter liegenden Graphenschichten an beiden Seiten Lithiumatome anlagern und werden durch die Polymeraußenschichten von anderen sich gegebenenfalls an dem Schichtsystem anlagernden Graphenschichten separiert und können so mit diesen kein Graphit ausbilden. So können sich den einander zugewandten Seiten der Graphenschichten vorteilhafterweise zweimal so viele Lithiumatome anlagern als bei Graphit.

Die Polymerschichten weisen vorzugsweise jeweils eine, insbesondere im Wesentlichen über die Länge und Breite der Schicht konstante, Schichtdicke (d) auf. Die Schichtdicke (d) der Polymerschichten ist vorzugsweise mindestens so groß, dass sich an beiden an der Polymerschicht anliegenden Graphenschichten Lithiumatome anlagern können. Beispielsweise können die Polymerschichten jeweils eine Schichtdicke (d) von ≥ etwa 600 pm oder etwa 700 pm oder etwa 800 pm bis ≤ 30 µm, beispielsweise von ≥ 1 nm ≤ 200 nm, zum Beispiel von ≥ 1 nm ≤ 5 nm, aufweisen. Dabei weisen die Polymerschichten vorzugsweise eine möglichst geringe, aber zur Lithiumatom-Anlagerung an beiden Graphenschichten ausreichende Schichtdicke (d) auf. Gegebenfalls können die Polymeraußenschichten des Schichtsystems eine geringere Schichtdicke (d) als die inneren Polymerschichten des Schichtsystems aufweisen.

Zur elektrischen Kontaktierung der negativen Elektrode und der positiven Elektrode beziehungsweise zum Ab- und/oder Zuleiten von elektrischem Strom zur und von der negativen beziehungsweise positiven Elektrode, kann das galvanische Element weiterhin zwei Kontaktelemente, welche auch als (Strom-)Kollektoren bezeichnet werden können, umfassen, auf denen jeweils die negative Elektrode beziehungsweise die positive Elektrode aufgebracht ist. Insbesondere kann das galvanische Element ein Kontaktelement zur elektrischen Kontaktierung der negativen Elektrode und ein Kontaktelement zur elektrischen Kontaktierung der positiven Elektrode umfassen. Die Kontaktelemente zur elektrischen Kontaktierung der negativen und positiven Elektrode können beispielsweise metallisch sein. Insbesondere können die Kontaktelemente zur elektrischen Kontaktierung der negativen und positiven Elektrode gleiche oder unterschiedliche metallische Folien sein. Zum Beispiel kann das Kontaktelement zur elektrischen Kontaktierung der negativen Elektrode aus Kupfer und das Kontaktelement zur elektrischen Kontaktierung der positiven Elektrode aus Aluminium oder Kupfer ausgebildet sein.

Die Schichten des Schichtsystems können senkrecht, parallel oder beliebig bezüglich des Separators ausgerichtet sein.

Im Rahmen einer weiteren Ausführungsform des galvanischen Elements sind die Schichten des Schichtsystems senkrecht zum Separator ausgerichtet. Auf diese Weise können die Lithiumatome schnell durch die kanalartigen Polymerschichten transportiert werden. Darüber hinaus können die Schichten des Schichtsystems senkrecht zu einem Kontaktelement zur elektrischen Kontaktierung der negativen Elektrode ausgerichtet sein. Auf diese Weise können die Graphenschichten das Kontaktelement zur elektrischen Kontaktierung der negativen Elektrode direkt stromleitend kontaktieren.

Im Rahmen einer weiteren Ausführungsform des galvanischen Elements umfasst die negative Elektrode eine Vielzahl von Schichtsystemen.

Weiterhin kann die negative Elektrode einzelne, vorzugsweise aus einer einzigen Graphenlage bestehende, Graphenschichten und/oder Schichtsysteme aus einer, vorzugsweise aus einer einzigen Graphenlage bestehenden, Graphenschicht und einer Polymerschicht und/oder Graphitpartikel umfassen. Vorzugsweise umfasst die negative Elektrode dabei einzelne, vorzugsweise aus einer einzigen Graphenlage bestehende, Graphenschichten und/oder Schichtsysteme aus einer, vorzugsweise aus einer einzigen Graphenlage bestehende, Graphenschicht und einer Polymerschicht. Beispielsweise kann die Summe der Anzahl an Schichtsystemen aus mindestens zwei Graphenschichten und mindestens einer Polymerschicht zu der Summe der Anzahl an einzelnen Graphenschichten und/oder Schichtsystemen aus einer Graphenschicht und einer Polymerschicht in einem 1:1-Verhältnis stehen. Durch Polymeraußenschichten des Schichtsystems aus mindestens zwei Graphenschichten und mindestens einer Polymerschicht kann verhindert werden, dass Graphenschichten an diese anlagern und Graphit bilden und es kann ermöglicht werden, dass sich an beiden Seiten der Graphenschichten Lithiumatome anlagern können.

Im Rahmen einer weiteren Ausführungsform des galvanischen Elements umfasst die negative Elektrode ein Bindemittel. In diesem Bindemittel kann eine Vielzahl von Schichtsystemen, insbesondere homogen verteilt, eingebunden sein. Die Polymerschichten und das Bindemittel können dabei aus dem gleichen Material ausgebildet sein. Das Bindemittel, welches auch als Elektrodenbinder bezeichnet werden kann, kann dabei die Schichtsysteme und gegebenenfalls andere darin eingebundene elektrochemisch aktive Zusatzstoffe mit einander und mit dem Kontaktelement zur elektrischen Kontaktierung der negativen Elektrode mechanisch verbinden. Darüber hinaus kann das Bindemittel die Graphenschichten der Schichtsysteme und gegebenenfalls andere darin eingebundene elektrochemisch aktive Zusatzstoffe mit dem Kontaktelement zur elektrischen Kontaktierung der negativen Elektrode elektrisch verbinden.

Im Rahmen einer weiteren Ausführungsform des galvanischen Elements umfassen die Polymerschichten und/oder das Bindemittel mindestens ein Polymer ausgewählt aus der Gruppe, bestehend aus Polyvinylidenfluorid (PVdF), Polyvinyliden-hexafluoropropylen-Copolymer (PVdF-HFP), Cellulose- oder Poly-StyrolButadien-Copolymer und Mischungen davon. Beispielsweise kann das Polymer der Polymerschicht und/oder das Bindemittel ein Polyvinylidenfluorid-, Polyvinyliden-hexafluoropropylen-Copolymer,- Cellulose- und/oder Poly-Styrol-Butadien-Copolymer basierter Elektrodenbinder sein.

Neben den Schichtsystemen können in diesem Bindemittel noch einzelne, vorzugsweise aus einer einzigen Graphenlage bestehende, Graphenschichten und/oder Schichtsysteme aus einer, vorzugsweise aus einer einzigen Graphenlage bestehenden, Graphenschicht und einer Polymerschicht und/oder Graphitpartikel und/oder Softcarbon-Partikel und/oder Hardcarbon-Partikel, insbesondere homogen verteilt, eingebunden sein. Vorzugsweise sind in dem Bindemittel einzelne, vorzugsweise aus einer einzigen Graphenlage bestehende, Graphenschichten und/oder Schichtsysteme aus einer, vorzugsweise aus einer einzigen Graphenlage bestehenden, Graphenschicht und einer Polymerschicht eingebunden.

Die negative Elektrode kann neben Graphen, Graphit, Softcarbons und Hardcarbons noch andere elektrochemisch aktive Zusatzstoffe, wie Titan, Silizium, Germanium, Zinn, Blei, Antimon, Bismuth, Zink, Aluminium, Cadmium, in metallischer Form, in Form von Legierungen und/oder in Form von Verbindungen und/oder Salzen, beispielsweise in Form von Oxiden, Hydroxiden, Carbiden, Nitriden, Sulfiden, Phosphiden, Seleniden, Telluriden, Antimoniden, insbesondere Silizium, umfassen. Beispielsweise kann die negative Elektrode dabei von ≥ 0 Gew.-% bis ≤ 10 Gew.-%, zum Beispiel von ≥ 5 Gew.-% bis ≤ 10 Gew.-% Silizium, beispielsweise von ≥ 0 Gew.-% bis ≥ 5 Gew.-%, an Zusatzstoffen, und von ≥ 90 Gew.-% bis ≤ 100 Gew.-%, zum Beispiel von ≥ 90 Gew.-% bis ≤ 95 Gew.-%, beispielsweise von ≥ 95 Gew.-% bis ≤ 100 Gew.-%, an Graphen umfassen, wobei die Summe der Gewichtsprozente von Graphen und den Zusatzstoffen zusammen 100 Gewichtsprozent ergibt.

Die negative Elektrode kann jedoch kein Titan, Silizium, Germanium, Zinn, Blei, Antimon, Bismuth, Zink, Aluminium, Cadmium, in metallischer Form, in Form von Legierungen und/oder in Form von Verbindungen und/oder Salzen, beispielsweise in Form von Oxiden, Hydroxiden, Carbiden, Nitriden, Sulfiden, Phosphiden, Seleniden, Telluriden, Antimoniden, beziehungsweise keine anderen elektrochemisch aktiven Zusatzstoffe als Graphen, Graphit, Softcarbons und Hardcarbons, insbesondere als Graphen, umfassen.

Die positive Elektrode kann beispielsweise Lithium-Kobalt-Oxid (LiCoO₂), Lithium-Mangan-Spinell (LiMn₂O₄), Lithium-Nickel-Cobalt-Manganoxide (NCM) und Mischungen davon als elektrochemisch aktives Material der positiven Elektrode umfassen.

Insbesondere kann das galvanische Element eine Lithium-Ionen-Wickel-Zelle oder eine Lithium-Ionen-Stapelzelle aufweisen.

Das erfindungsgemäße galvanische Element kann beispielsweise eine Kapazität von ≥ 10mAh bis ≤ 500 Ah, insbesondere von ≥ 4 Ah bis ≤ 60 Ah, aufweisen.

Einweiterer Gegenstand der vorliegenden Erfindung ist ein Verfahren zur Herstellung einer negativen Elektrode eines erfindungsgemäßen galvanischen Elements, insbesondere zur Herstellung eines erfindungsgemäßen galvanischen Elements, umfassend die Verfahrensschritte:
a) Aufbringen einer ersten Graphenschicht auf einem Substrat; und
b) Aufbringen einer ersten Polymerschicht auf die erste Graphenschicht; und
c) Aufbringen einer zweiten Graphenschicht auf die erste Polymerschicht.

Im Rahmen einer Ausführungsform des Verfahrens wird die erste Graphenschicht in Verfahrensschritt a) durch chemische Gasphasenabscheidung auf dem Substrat aufgebracht. Bei dem Substrat kann es sich dabei um ein metallisches Substrat, beispielsweise aus Kupfer oder Nickel, handeln. Im Rahmen einer Ausgestaltung kann das Substrat anschließend als metallische Kontaktelektrode zum Kontaktieren der Graphenschichten verwendet werden. Die zweite Graphenschicht kann in Verfahrensschritt c) gegebenenfalls ebenfalls durch chemische Gasphasenabscheidung direkt auf die erste Polymerschicht hergestellt und aufgebracht werden. Die zweite Graphenschicht kann jedoch auch vorher durch chemische Gasphasenabscheidung auf einem anderen, beispielsweise metallischen, Substrat hergestellt werden und in Verfahrensschritt c) auf die erste Polymerschicht aufgebracht, insbesondere übertragen, werden. Die Graphenschichten können beispielsweise durch chemische Gasphasenabscheidung von Methan auf einem metallischen Substrat hergestellt werden. Ein derartiges Verfahren wird beispielsweise von Kim et al. in der Druckschrift: "Large-Scale Pattern Growth of Graphene Films for Stretchable Transparent Electrodes", Nature 457, 2009, S. 706 beschrieben.

Die erste Polymerschicht kann in Verfahrensschritt b) durch ein Beschichtungsverfahren, beispielsweise durch Spin-Coating, auf der ersten Graphenschicht aufgebracht werden. Die erste Polymerschicht kann mit der zweiten Graphenschicht beispielsweise dadurch verbunden werden, dass die erste Polymerschicht thermoplastisch ist und beim oder nach dem Aufbringen der zweiten Graphenschicht, gegebenenfalls unter Druck, erwärmt und wieder abgekühlt wird.

Die erste Polymerschicht kann in Verfahrensschritt b) jedoch auch in Form eines doppelseitig klebenden Films, auf die erste Graphenschicht aufgebracht werden. Auf der freien Seite des doppelseitig klebenden Films kann anschließen die zweite Graphenschicht aufgebracht, insbesondere fixiert, werden.

Darüber hinaus kann das Verfahren nach dem Verfahrensschritt c) den Verfahrensschritt: d) Aufbringen einer zweiten Polymerschicht auf die ersten und/oder zweiten Graphenschicht, umfassen. Das Aufbringen der zweiten Polymerschicht kann dabei ebenfalls dein Beschichtungsverfahren, beispielsweise durch Spin-Coating, beziehungsweise durch Aufbringen eines doppelseitig klebenden Films erfolgen.

Weiterhin kann das Verfahren nach dem Verfahrensschritt d) einen oder mehrere Verfahrensschritt:
e) Aufbringen einer weiteren Graphenschicht auf die zweite Polymerschicht; und
   Aufbringen einer weiteren Polymerschicht auf die weitere Graphenschicht; umfassen. Die weiteren Graphenschichten und Polymerschichten können dabei durch die zuvor beschriebenen Methoden hergestellt beziehungsweise aufgebracht werden.

Zur Herstellung eines Schichtsystems mit einer Vielzahl von alternierenden Graphenschichten und Polymerschichten kann das Verfahren weiterhin den Verfahrensschritt:
f) Herstellen von mindestens zwei Schichtsystemen, welche jeweils mindestens ein erste Graphenschicht, eine erste Polymerschicht, eine zweite Graphenschicht und wahlweise eine zweite Polymerschicht umfassen, und Aufeinanderstapel der Schichtsysteme, insbesondere in der Form, dass eine Graphenschicht an einer Polymerschicht anliegt,
umfassen.

Beispielsweise insofern das Substrat später keine Funktion des galvanischen Elements übernehmen soll, so kann das Verfahren den Verfahrensschritt:
g) Abziehen des Schichtsystems von dem Substrat,
   umfassen.

Ferner kann das Verfahren den Verfahrensschritt:
h) Zerteilen des Schichtsystems, beispielsweise durch Schneiden oder Mahlen, in eine Vielzahl von Schichtsystemen,
umfassen.

Die auf diese Weise hergestellten Schichtsysteme können auf eine metallische Kontaktelektrode und/oder einen Separator aufgebracht werden. Insbesondere kann auf die eine Seite des Schichtsystems auf die Kontaktelektrode und die andere Seite des Schichtsystems auf den Separator aufgebracht werden. Die Schichten des Schichtsystems können dabei senkrecht, parallel oder beliebig zu der Kontaktelektrode beziehungsweise dem Separator ausgerichtet sein.

Eine beliebige Ausrichtung kann beispielsweise darauf beruhen, dass eine Vielzahl von Schichtsystemen in ein Bindemittel gemischt wird und eine metallische Folie, beispielsweise aus Aluminium oder Kupfer, mit dem BindemittelSchichtsystem-Gemisch beschichtet wird. Diese Anordnung bildet später insbesondere die negative Elektrode des galvanischen Elements. Zusätzlich zu den Schichtsystemen können - wie zuvor beschrieben noch weitere Stoffe, beispielsweise einzelne Graphenschichten und/oder Graphenschicht-Polymerschicht-Schichtsysteme und/oder Graphit in das Bindemittel gemischt werden. Gegebenenfalls kann die beschichtete, metallische Folie anschließen in kleinere Teile zerschnitten werden.

In analoger Weise kann eine positive Elektrode dadurch hergestellt werden, dass ein elektrochemisch aktives Material, beispielsweise Lithium-Kobalt-Oxid (Li-CoO₂), auf eine metallische Folie, beispielsweise aus Kupfer oder Aluminium, aufgebracht wird.

Auf der Bindemittel-Schichtsystem-Schicht der negativen Elektrode kann anschließend eine Separatorschicht und darauf wiederum die elektrochemisch aktive Materialschicht der positiven Elektrode aufgebrachte werden. Das resultierende Schichtsystem kann anschließend in kleinere Teile zerteilt und/oder gewickelt werden. Anschließend können die Kontakte (Pole) an die metallischen Folien angeschweißt werden. Schließlich kann die Anordnung in ein Gehäuse überführt, Elektrolyt zudosiert, das Gehäuse, beispielsweise durch Laser-Schweißen, verschlossen und das galvanische Element, beispielsweise durch Anlegen eines elektrischen Stroms beziehungsweise einer elektrischen Spannung, formiert werden.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: einen schematischen Querschnitt durch ein erste Ausführungsform eines Schichtsystems einer erfindungsgemäßen negativen Elektrode mit zwei Graphenschichten und drei, alternierend zu den Graphenschichten angeordneten Polymerschichten;
- Fig. 2: einen schematischen Querschnitt durch eine Vielzahl von Schichtsystemen, welche durch Zerteilen des Schichtsystems aus Fig. 1 hergestellt wurden, gemäß einer zweiten Ausführungsform;
- Fig. 3: einen schematischen Querschnitt durch eine dritte Ausführungsform eines Schichtsystems einer erfindungsgemäßen negativen Elektrode mit einer Vielzahl von alternierenden Graphenschichten und Polymerschichten;
- Fig. 4: eine schematische perspektivische Ansicht einer, aus einer Graphenlage bestehenden Graphenschicht mit daran angelagerten Lithiumatomen, welche zu den Kohlenstoffatomen der Graphenschicht in einem Verhältnis von 2 zu 6 stehen;
- Fig. 5: einen schematischen Querschnitt durch eine erste Ausführungsform eines erfindungsgemäßen galvanischen Elements mit einer positiven Elektrode, einem Separator und einer negativen Elektrode, wobei die Schichten des Schichtsystems der negativen Elektrode senkrecht zum Separator ausgerichtet sind;
- Fig. 6: einen schematischen Querschnitt durch eine zweite Ausführungsform eines erfindungsgemäßen galvanischen Elements mit einer positiven Elektrode, einem Separator und einer negativen Elektrode, wobei die Schichten des Schichtsystems der negative Elektrode beliebig zum Separator ausgerichtet sind; und
- Fig. 7: einen schematischen Querschnitt durch eine dritte Ausführungsform eines erfindungsgemäßen galvanischen Elements mit einer positiven Elektrode, einem Separator und einer negativen Elektrode, wobei die Schichten des Schichtsystems der negativen Elektrode parallel zum Separator ausgerichtet sind.

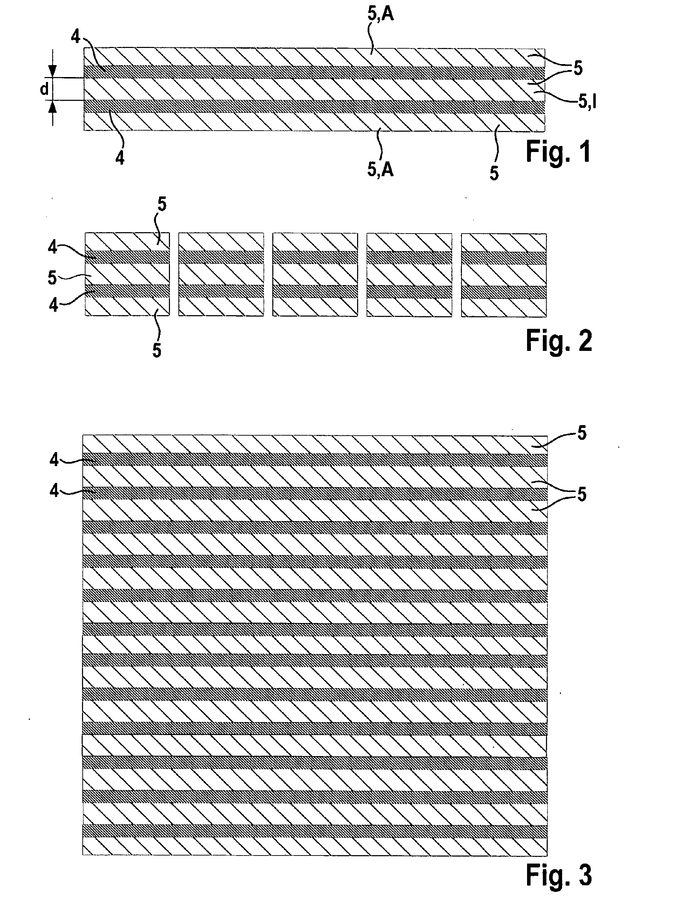

Figur 1 zeigt eine erste Ausführungsform eines Schichtsystems 5,4,5,4,5 einer erfindungsgemäßen negativen Elektrode. Im Rahmen dieser Ausführungsform umfasst das Schichtsystem 5,4,5,4,5 zwei Graphenschichten 4 und drei Polymerschichten 5. Die Polymerschichten 5 sind dabei zu den Graphenschichten 4 alternierend angeordnet. Eine Polymerschicht 5 mit einer Schichtdicke d ist zwischen den zwei Graphenschichten 4 angeordnet und kann somit als innere Polymerschicht I bezeichnet werden. Darüber hinaus sind auch die beide Außenschicht A des Schichtsystems 5,4,5,4,5 Polymerschichten 5. Figur 1 zeigt, dass die Polymeraußenschichten A des Schichtsystems 5,4,5,4,5 eine geringere Schichtdicke d als die inneren Polymerschichten I des Schichtsystems 5,4,5,4,5 aufweisen.

Figur 2 zeigt, dass durch Zerteilen des Schichtsystems 5,4,5,4,5 aus Figur 1 eine Vielzahl von Schichtsystemen 5,4,5,4,5 gemäß der zweiten Ausführungsform von erfindungsgemäßen Schichtsystemen 5,4,5,4,5 hergestellt wurde.

Figur 3 zeigt eine dritte Ausführungsform eines Schichtsystems 5,4,5,4,5 einer erfindungsgemäßen negativen Elektrode. Im Rahmen dieser Ausführungsform umfasst das Schichtsystem 5,4,5,4,5 eine Vielzahl von alternierenden Graphenschichten 4 und Polymerschichten 5. Die beide Außenschicht A des Schichtsystems 5,4,5,4,5 sind auch im Rahmen dieser Ausführungsform Polymerschichten 5.

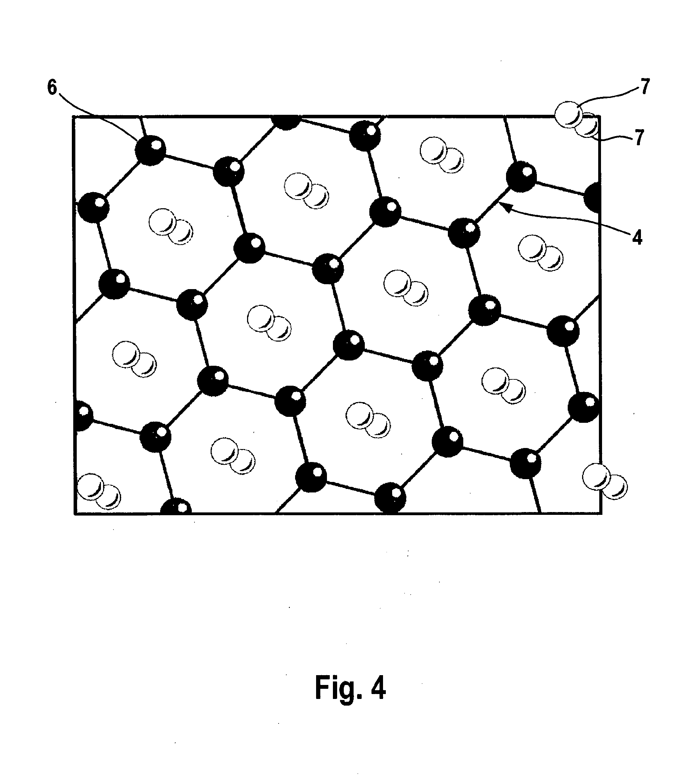

Figur 4 zeigt eine Graphenschicht, welche aus einer Graphenlage besteht. Figur 4 illustriert, dass an der Graphenlage beidseitig Lithiumatomen angelagert sein. Figur 4 veranschaulicht, dass dabei die Lithiumatomen 7 zu den Kohlenstoffatome 6 der Graphenschicht 4 in einem Verhältnis von 2 zu 6 stehen.

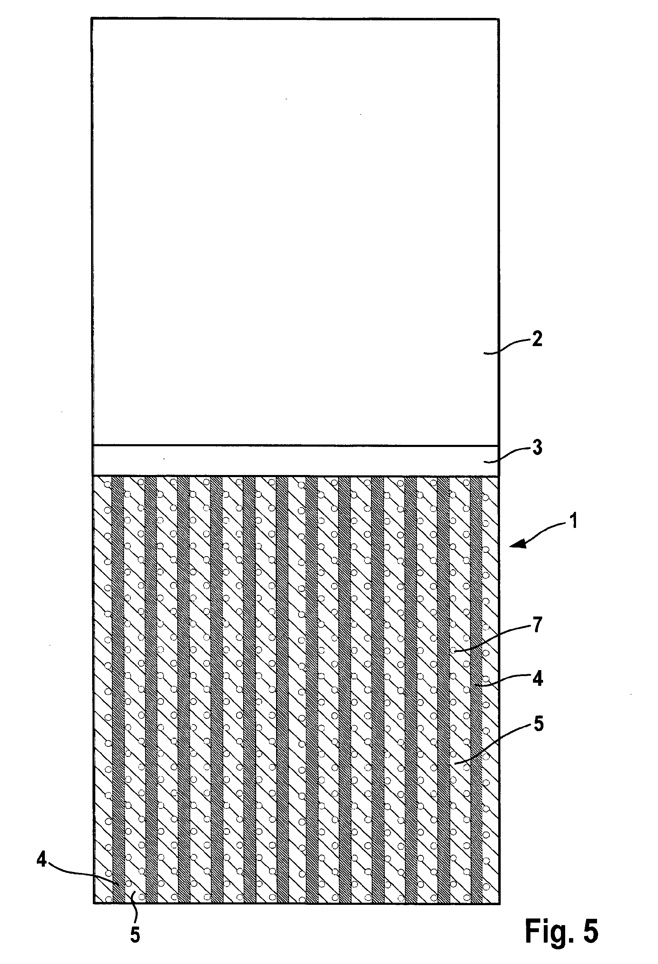

Figur 5 zeigt eine erste Ausführungsform eines erfindungsgemäßen galvanischen Elements, welches eine negative Elektrode 1, eine positive Elektrode 2 und einen Separator 3 umfasst. Figur 5 veranschaulicht, dass die negative Elektrode ein Schichtsystem 5,4,5 aus einer Vielzahl an alternierend angeordneten Graphenschichten 4 und Polymerschichten 5 umfasst. Figur 5 zeigt, dass an den Graphenschichten 4 beidseitig Lithiumatome 7 angelagert sind. Im Rahmen dieser Ausführungsform sind die Schichten 4,5 des Schichtsystems 5,4,5 senkrecht zum Separator 3 ausgerichtet.

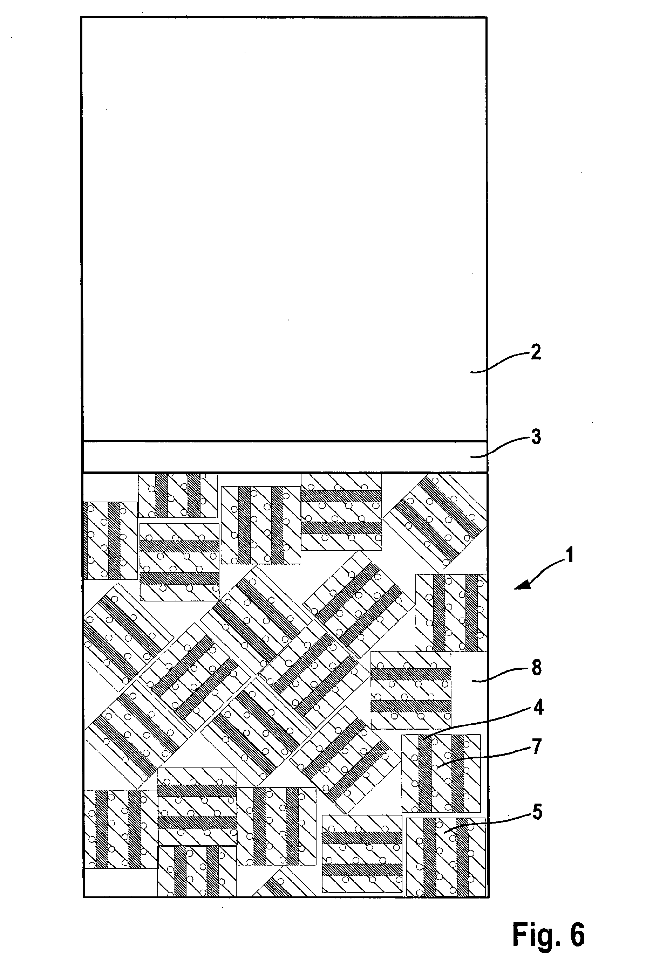

Die in Figur 6 gezeigte zweite Ausführungsform eines erfindungsgemäßen galvanischen Elements unterscheidet sich dadurch von der ersten, in Figur 5 gezeigten Ausführungsform eines erfindungsgemäßen galvanischen Elements, dass die negative Elektrode 1 eine Vielzahl von Schichtsystemen 4,5,4 umfasst, welche bezüglich des Separators 3 beliebig ausgerichtet und in ein Bindemittel 8 eingebunden sind.

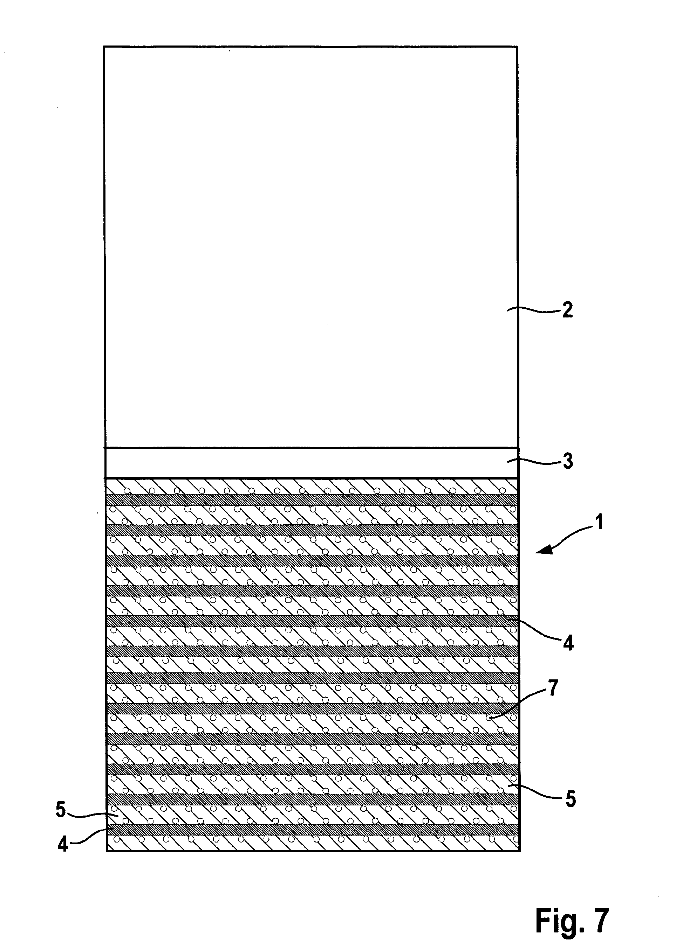

Die in Figur 7 gezeigte dritte Ausführungsform eines erfindungsgemäßen galvanischen Elements unterscheidet sich dadurch von der ersten, in Figur 5 gezeigten Ausführungsform eines erfindungsgemäßen galvanischen Elements, dass das Schichtsystem 4,5,4 der negativen Elektrode 1 parallel zum Separator 3 ausgerichtet ist.

## Patentansprüche

1. Galvanisches Element, umfassend eine negative Elektrode (1), eine positive Elektrode (2) und einen zwischen der negativen Elektrode (1) und der positiven Elektrode (2) angeordneten Separator (3),
**dadurch gekennzeichnet, dass**
die negative Elektrode (1) mindestens ein Schichtsystem (5,4,5) umfasst, welches (5,4,5) mindestens zwei Graphenschichten (4) und mindestens eine Polymerschicht (5) umfasst, wobei eine Polymerschicht (5) zwischen zwei Graphenschichten (4) angeordnet ist.

2. Galvanisches Element nach Anspruch 1, **dadurch gekennzeichnet, dass** jede Graphenschicht (4) aus einer einzigen Graphenlage besteht.

3. Galvanisches Element nach Anspruch 1 oder 2, **dadurch gekennzeichnet, dass** an den Graphenschichten (4) beidseitig Lithiumatome (7) angelagert oder anlagerbar sind.

4. Galvanisches Element nach Anspruch 3, **dadurch gekennzeichnet, dass** die Zahl der Kohlenstoffatome (6) der Graphenschicht (4) zu der Zahl der, an der Graphenschicht (4) angelagerten Lithiumatome (7) in einem Verhältnis von 6:1,8 bis 6:2,2 steht.

5. Galvanisches Element einem der Ansprüche 1 bis 4 **dadurch gekennzeichnet, dass** das Schichtsystem (5,4,5) mindestens zwei Graphenschichten (4) und mindestens zwei Polymerschichten (5) umfasst, wobei die Graphenschichten (4) und Polymerschichten (5) alternierend angeordnet sind.

6. Galvanisches Element nach einem der Ansprüche 1 bis 5, **dadurch gekennzeichnet, dass** zumindest eine Außenschicht (A) des Schichtsystems (5,4,5) Polymerschichten (5) sind.

7. Galvanisches Element nach einem der Ansprüche 1 bis 6, **dadurch gekennzeichnet, dass** die Schichten (4,5) des Schichtsystems (5,4,5) senkrecht zum Separator (3) ausgerichtet sind.

8. Galvanisches Element nach einem der Ansprüche 1 bis 7, **dadurch gekennzeichnet, dass** die negative Elektrode (1) eine Vielzahl von Schichtsystemen (5,4,5) umfasst.

9. Galvanisches Element nach Anspruch 8, **dadurch gekennzeichnet, dass** die negative Elektrode (1) ein Bindemittel (8) umfasst, in welches die Vielzahl von Schichtsystemen (5,4,5) eingebunden ist.

10. Galvanisches Element nach einem der Ansprüche 1 bis 9, **dadurch gekennzeichnet, dass** die Polymerschichten (5) und/oder das Bindemittel (8) mindestens ein Polymer ausgewählt aus der Gruppe, bestehend aus Polyvinylidenfluorid, Polyvinyliden-hexafluoropropylen-Copolymer, Cellulose oder Poly-Styrol-Butadien-Copolymer und Mischungen davon, umfasst.

11. Verfahren zur Herstellung einer negativen Elektrode eines galvanischen Elements nach einem der Ansprüche 1 bis 10, umfassend die Verfahrensschritte:
a) Aufbringen einer ersten Graphenschicht (4) auf einem Substrat; und
b) Aufbringen einer ersten Polymerschicht (5) auf die erste Graphenschicht (4); und
c) Aufbringen einer zweiten Graphenschicht (4) auf die erste Polymerschicht (5).

12. Verfahren nach Anspruch 11, **dadurch gekennzeichnet, dass**:
- die erste Graphenschicht (4) in Verfahrensschritt a) durch chemische Gasphasenabscheidung auf dem Substrat aufgebracht wird; und/oder
- die zweite Graphenschicht (4) durch chemische Gasphasenabscheidung hergestellt wird.

## Claims

1. Electrochemical element comprising a negative electrode (1), a positive electrode (2) and a separator (3) which is arranged between the negative electrode (1) and the positive electrode (2),
**characterized in that**
the negative electrode (1) comprises at least one layer system (5,4,5) which (5,4,5) comprises at least two graphene layers (4) and at least one polymer layer (5), with a polymer layer (5) being arranged between two graphene layers (4).

2. Electrochemical element according to Claim 1, **characterized in that** each graphene layer (4) consists of a single graphene sheet.

3. Electrochemical element according to Claim 1 or 2, **characterized in that** lithium atoms (7) are attached or can be attached to both sides of the graphene layers (4).

4. Electrochemical element according to Claim 3, **characterized in that** the ratio of the number of carbon atoms (6) of the graphene layer (4) to the number of lithium atoms (7) attached to the graphene layer (4) is from 6:1.8 to 6:2.2.

5. Electrochemical element according to any of Claims 1 to 4, **characterized in that** the layer system (5,4,5) comprises at least two graphene layers (4) and at least two polymer layers (5), with the graphene layers (4) and polymer layers (5) being arranged alternately.

6. Electrochemical element according to any of Claims 1 to 5, **characterized in that** at least one outer layer (A) of the layer system (5,4,5) is a polymer layer (5).

7. Electrochemical element according to any of Claims 1 to 6, **characterized in that** the layers (4,5) of the layer system (5,4,5) are oriented perpendicular to the separator (3).

8. Electrochemical element according to any of Claims 1 to 7, **characterized in that** the negative electrode (1) comprises a plurality of layer systems (5,4,5).

9. Electrochemical element according to Claim 8, **characterized in that** the negative electrode (1) comprises a binder (8) in which the plurality of layer systems (5,4,5) are embedded.

10. Electrochemical element according to any of Claims 1 to 9, **characterized in that** the polymer layers (5) and/or the binder (8) comprise(s) at least one polymer selected from the group consisting of polyvinylidene fluoride, polyvinylidene-hexafluoropropylene copolymer, cellulose or polystyrene-butadiene copolymer and mixtures thereof.

11. Process for producing a negative electrode of an electrochemical element according to any of Claims 1 to 10, which comprises the process steps:
a) application of a first graphene layer (4) to a substrate; and
b) application of a first polymer layer (5) to the first graphene layer (4); and
c) application of a second graphene layer (4) to the first polymer layer (5).

12. Process according to Claim 11, **characterized in that**:
- the first graphene layer (4) is applied to the substrate by chemical vapour deposition in process step a); and/or
- the second graphene layer (4) is produced by chemical vapour deposition.

## Revendications

1. Elément galvanique comprenant une électrode négative (1), une électrode positive (2) et un séparateur (3) disposé entre l'électrode négative (1) et l'électrode positive (2),
**caractérisé en ce que**
l'électrode négative (1) comporte au moins un système stratifié (5, 4, 5) qui (5, 4, 5) qui présente au moins deux couches (4) de graphène et au moins une couche polymère (5), une couche polymère (5) étant disposée entre deux couches (4) de graphène.

2. Elément galvanique selon la revendication 1, **caractérisé en ce que** chaque couche (4) de graphène est constituée d'une seule couche de graphène.

3. Elément galvanique selon les revendications 1 ou 2, **caractérisé en ce que** des atomes de lithium (7) sont disposés ou peuvent être disposés sur les deux faces des couches de graphène (4).

4. Elément galvanique selon la revendication 3, **caractérisé en ce que** le nombre des atomes de carbone (6) de la couche (4) de graphène présente par rapport au nombre des atomes de lithium (7) déposés sur la couche (4) de graphène un rapport compris entre 6:1,8 et 6:2,2.

5. Elément galvanique selon l'une des revendications 1 à 4, **caractérisé en ce que** le système de couches (5, 4, 5) comporte au moins deux couches (4) de graphène et au moins deux couches polymères (5), les couches (4) de graphène et les couches polymères (5) étant disposées en alternance.

6. Elément galvanique selon l'une des revendications 1 à 5, **caractérisé en ce qu'**au moins une couche extérieure (A) du système de couches (5, 4, 5) sont des couches polymères (5).

7. Elément galvanique selon l'une des revendications 1 à 6, **caractérisé en ce que** des couches (4, 5) du système de couches (5, 4, 5) sont orientées perpendiculairement au séparateur (3).

8. Elément galvanique selon l'une des revendications 1 à 7, **caractérisé en ce que** l'électrode négative (1) comporte plusieurs systèmes de couches (5, 4, 5).

9. Elément galvanique selon la revendication 8, **caractérisé en ce que** l'électrode négative (1) comporte un liant (8) dans lequel les différents systèmes de couches (5, 4, 5) sont incorporés.

10. Elément galvanique selon l'une des revendications 1 à 9, **caractérisé en ce que** les couches polymères (5) et/ou le liant (8) comportent au moins un polymère sélectionné dans l'ensemble constitué du poly(fluorure de vinylidène), d'un copolymère de vinylidène et d'hexafluoropropylène, de la cellulose et d'un copolymère de styrène et de butadiène ainsi que de leurs mélanges.

11. Procédé de fabrication d'une électrode négative et d'un élément galvanique selon l'une des revendications 1 à 10, le procédé comportant les étapes suivantes :
a) application d'une première couche (4) de graphène sur un substrat et
b) application d'une première couche polymère (5) sur la première couche (4) de graphène et
c) application d'une deuxième couche de graphène (4) sur la première couche polymère (5).

12. Procédé selon la revendication 11, **caractérisé en ce que** la première couche (4) de graphène est appliquée sur le substrat au cours de l'étape a) du procédé par dépôt chimique en phase gazeuse et/ou **en ce que** la deuxième couche (4) de graphène est réalisée par dépôt chimique en phase gazeuse.
